# FASCICULE DE BREVET EUROPEEN

(11) **EP 2 640 808 B1**
(45) Date de publication et mention de la délivrance du brevet: **18.07.2018**
(21) Numéro de dépôt: 11802489.2
(22) Date de dépôt: 21.11.2011
(51) Int. Cl.: C10G 1/02, C10G 45/72, C10G 3/00, C10L 1/00, B01J 8/04

(54) **PROCEDE D'HYDRODESOXYGENATION ET PROCEDE DE VALORISATION D'HUILE DE PYROLYSE ISSUE DE LA BIOMASSE SUSCEPTIBLES DE FONCTIONNER EN CONTINU**
VERFAHREN ZUR HYDRODEOXYGENIERUNG SOWIE VERFAHREN ZUR AUFWERTUNG VON PYROLYSEÖL AUS BIOMASSE, BEIDE MIT KONTINUIERLICHEM BETRIEB
PROCESS FOR HYDRODEOXYGENATION AND PROCESS FOR UPGRADING OF PYROLYSIS OIL RESULTING FROM BIOMASS, WHICH ARE CAPABLE OF OPERATING CONTINUOUSLY

(30) Priorité: 19.11.2010 FR 1059530
(43) Date de publication de la demande: 25.09.2013
(73) Titulaire: Total Raffinage France, 92400 Courbevoie (FR)
(72) Inventeur: MAYEUR, Vincent, F-14600 Honfleur (FR); PREAU, Alexandre, F-92800 Puteaux (FR)
(74) Mandataire: Largeau, Béatrice
(86) Numéro de dépôt international: PCT/FR2011/052714
(87) Numéro de publication internationale: WO 2012/066263

(56) Documents cités:
- WO-A2-2009/126508
- FR-A1- 2 949 233
- US-A- 4 707 245
- US-A- 5 000 924
- US-A1- 2007 010 682
- US-A1- 2008 053 870
- US-A1- 2010 242 349

## Description

L'invention concerne un procédé d'hydrodésoxygénation (HDO) d'huile de pyrolyse de biomasse susceptible de fonctionner en continu ainsi qu'un procédé de valorisation d'huile de pyrolyse de biomasse comprenant dans une 1^{ère} étape, ledit procédé d'HDO.

Les huiles de pyrolyse de biomasse, ou bio-huiles, sont issues de la pyroliquéfaction, également appelée pyrolyse rapide à basse température, de biomasse de type bois (feuillus, résineux), de paille, de cultures énergétiques (taillis à courte rotation (TCR), taillis à très courte rotation (TTCR), miscanthus, switchgrass, sorgho...) et résidus de biomasse forestière ou agricole tels que écorces, copeaux, sciures, bagasses... Ces huiles de pyrolyse sont donc issues de biomasse lignocellulosique constituée de holocelluloses (cellulose, hémicellulose) et lignine.

Ces huiles de pyrolyse issues de la biomasse sont produites par dépolymérisation et fragmentation des éléments constitutifs de la biomasse (holocelluloses (cellulose, hémicellulose), lignine) sous l'action d'une augmentation rapide (<2 secondes) de la température à 450°C-550°C et d'une trempe rapide des produits intermédiaires de dégradation.

Elles peuvent être considérées comme des microémulsions dans lesquelles la phase continue liquide est une solution aqueuse des produits de décomposition de la cellulose et de l'hémicellulose et de petites molécules de lignine. La phase liquide continue stabilise la phase discontinue organique constituée essentiellement de macromolécules de la lignine pyrolytique. Ces huiles de pyrolyse sont constituées d'eau et d'un mélange complexe de composés oxygénés. Leur composition élémentaire est proche de la composition de la biomasse de départ avec en particulier une teneur importante en oxygène.

La composition moléculaire organique moyenne analysable des huiles de pyrolyse peut en général être décrite par les familles présentées dans le tableau 1.

**Tableau 1**

| | Teneur (%m/m) |
|---|---|
| Lignine pyrolytique | 15-25 |
| Acides organiques | 5-15 |
| Aldéhydes et hydroxy-aldéhydes | 5-20 |
| Cétones et hydroxy-cétones | 0-15 |
| Phénols | 15-35 |
| Méthanol, Ethanol | 1-5 |

Le tableau 2 suivant regroupe les principales caractéristiques des huiles de pyrolyse.

**Tableau 2**

| Propriétés | | Huiles de pyrolyse |
|---|---|---|
| pH | | 2,0-3,7 |
| Teneur en eau (% m/m) | | 15-35 |
| Masse volumique à 15°C (kg/m³) | | 1110-1300 |
| Viscosité à 20°C (mm²/s) | | 50-130 |
| Viscosité à 40°C (mm²/s) | | 12-35 |
| Analyse élémentaire (%m/m) | C | 30-50 |
| | H | 6-9 |
| | O | 40-60 |
| Matières solides (%m/m) | | 0,01-2 |
| Cendres (%m/m) | | 0,01-0,20 |
| Pouvoir Calorifique Supérieur PCS (MJ/kg) | | 13-19 |
| Métaux (K+Na) (mg/kg) | | 10-300 |

Les huiles de pyrolyse se caractérisent par une masse volumique élevée et une viscosité variable en fonction, entre autres, de la biomasse de départ. Comme elles sont acides et donc corrosives, leur utilisation nécessite l'emploi de matériels spécifiques, résistants à la corrosion, tels que l'acier inoxydable, le polyéthylène haute densité, le propylène...

Par ailleurs, les huiles de pyrolyse sont instables chimiquement et thermiquement. L'instabilité chimique des huiles de pyrolyse se traduit par l'évolution dans le temps de leurs propriétés physico-chimiques (viscosité, teneur en eau, teneur en solides,...) pouvant aboutir à une séparation en deux phases. L'instabilité thermique des huiles de pyrolyse se traduit par une évolution très rapide de leurs propriétés lorsqu'elles sont chauffées à des températures supérieures à 80°C. Du fait de cette instabilité, ces produits ne peuvent être valorisés en raffinerie sous leur forme brute, excepté dans un applicatif de combustion moyennant quelques modifications des installations actuelles. Pour toute autre application en raffinerie, il semble nécessaire de stabiliser les huiles de pyrolyse avant utilisation, par exemple par élimination ou transformation des espèces les plus réactives.

Les huiles de pyrolyse présentent en général une teneur en eau moyenne de l'ordre de 25% m/m, une teneur en oxygène de la fraction organique de l'ordre de 35-40% m/m et une structure moléculaire d'une grande complexité. Leur teneur en eau peut en outre conduire à une séparation partielle de phase ayant une incidence sur leurs autres propriétés physiques. Enfin, leurs teneurs en cendres et alcalins peuvent conduire à la formation de dépôts et à l'encrassement des installations.

De plus, en raison de leur nature hydrophile et de leur polarité, les huiles de pyrolyse rapide ne sont pas miscibles avec les hydrocarbures. Ainsi, les huiles de pyrolyse ne peuvent pas être valorisées en tant que telles en raffinerie en mélange avec des coupes hydrocarbonées d'origine fossile.

En raison de leurs propriétés particulières énoncées ci-dessus, l'utilisation des huiles de pyrolyse de biomasse soulève de nombreux problèmes.

Actuellement les principales voies de valorisation étudiées sont la combustion de l'huile de pyrolyse de biomasse dans des chaudières ou des turbines à gaz pour produire de la chaleur et/ou de l'électricité, ou la production de bases pour la chimie.

Pour pouvoir être utilisées dans des raffineries en vue de la production de carburants ou de combustibles liquides renouvelables (ou partiellement renouvelables s'ils sont mélangés avec des carburants ou combustibles d'origine fossile), les huiles de pyrolyse de biomasse doivent subir un prétraitement visant à les stabiliser. Un tel prétraitement peut être une étape d'hydrodésoxygénation. Cette hydrodésoxygénation (HDO) peut notamment être réalisée suivant la réaction simplifiée :

C₆H₈O₄ + 4 H₂ → C₆H₈ + 4 H₂O

L'HDO de l'huile de pyrolyse peut être poussée (conversion > 90%) ou totale (conversion = 100%), pour transformer les bio-huiles en bases carburant ou pour les rendre miscibles avec les coupes hydrocarbonées d'origine pétrolière et ainsi l'introduire dans le schéma de raffinage.

Lorsque l'hydrodésoxygénation de l'huile de pyrolyse est partielle (par exemple 50±40 %), les produits obtenus à l'issue de l'HDO ne peuvent pas être incorporés tels quels dans un pool carburant. Néanmoins, ces produits peuvent être introduits dans des unités de combustion (chaudière) et de conversion existantes, connues en soi (hydrotraitement, FCC, viscoréduction, coker) ou être utilisés comme intermédiaires chimiques (acide acétique, phénols,...)

L'HDO de l'huile de pyrolyse est en général effectuée par hydrotraitement (HDT), en général réalisé à une température allant de 150 à 350°C et une pression de 10 à 20 MPa en présence d'un catalyseur. L'utilisation de pressions élevées favorise la réaction d'HDO et permet de diminuer la vitesse des réactions de polymérisation de l'huile de pyrolyse par rapport aux réactions d'HDO.

En général, dans l'étape d'HDO, on mélange l'hydrogène avec la charge en amont du réacteur d'hydrotraitement et on fait passer ce mélange à travers un 1^{er} lit catalytique en écoulement à co-courant ou à contre-courant.

La réaction d'hydrodésoxygénation est fortement exothermique et difficile à contrôler : on constate parfois des phénomènes de cokage du catalyseur allant jusqu'au bouchage du réacteur. Il est alors nécessaire de stopper le réacteur pour procéder à son nettoyage. Voir par exemple Liquid fuels by low-severity hydrotreating of biocrude, D.C. Elliott & G.G Neuenschwander, Developments in Thermochemical Biomass Conversion, vol. 1, pp. 611-621*,* A.V. Bridgwater and D.G. B. Boocock, eds, Blackie Academic & Professional, London : 1996. Voir aussi Hydrogen from biomass-production by steam reforming of biomass pyrolysis oil, S Czernik et al, CATTOD-5270; page 3*.*

Lorsqu'on souhaite une HDO poussée ou totale de l'huile de pyrolyse, la réaction d'HDO peut être réalisée dans 2 réacteurs en série, chacun fonctionnant de manière adiabatique et isotherme ou quasi-isotherme. Dans ce cas, le 1^{er} réacteur peut fonctionner à basse température, typiquement à une température allant de 120 à 180°C, le 2^{nd} peut fonctionner à une température plus élevée de 300 à 400°C, préférentiellement à 350°C. voir par exemple D.C. Elliott et al, Pacific Northwest National Laboratory, Richland, Whashington, USA, Hydrogenation of bio-oil for chemical and fuel production, pp 1536-1576*.*

Mais là encore, on constate des phénomènes de cokage du ou des catalyseurs ne permettant pas un fonctionnement en continu de l'HDO de l'huile de pyrolyse.

Les réacteurs d'HDO d'huile de pyrolyse de l'art antérieur sont des réacteurs isothermes contenant un ou plusieurs lits catalytiques, fixes ou non.

La présente invention propose un procédé d'HDO d'huile de pyrolyse susceptible de fonctionner en continu sans présenter les inconvénients des procédés connus jusqu'ici : risques de cokage des catalyseurs, bouchages et obligation de stopper la réaction d'HDO pour nettoyer le réacteur.

Le procédé d'HDO, objet de l'invention, consiste à opérer avec un système catalytique comprenant une pluralité de lits catalytiques disposés en série, répartis dans un ou plusieurs réacteurs, équipé de moyens de contrôle de la température et caractérisé par
- l'injection de l'huile de pyrolyse en tête du 1^{er} lit catalytique,
- l'injection de manière fractionnée de l'hydrogène :
- la 1^{ère} injection d'hydrogène est effectuée en tête du 1^{er} lit catalytique,
- la ou les autres injections d'H₂ étant effectuée(s) entre 2 lits catalytiques et choisies telles que la différence entre les températures d'injections successives d'H₂ ne dépasse pas 50 °C (ΔTmax (température d'injection d'H2 de rang (n+1) - température d'injection d'H2 de rang (n) ≤ 50 °C), de préférence ΔTmax ≤ 20 à 30 °C.

Par « température d'injection d'H₂», on entend la température locale à l'intérieur du réacteur au niveau de l'injection correspondante d'H₂. Les injections d'H₂ sont généralement effectuées entre les lits catalytiques du réacteur.

La différence de température ΔTmax correspond ainsi à la variation de température du lit catalytique situé entre deux injections successives d'H₂.

Les variations de température au sein du réacteur proviennent de l'exothermicité de la réaction entre H₂ et l'huile de pyrolyse, la présente invention permet de contrôler l'exothermicité en contrôlant la température du flux d'H₂ injecté et/ou le débit de ce flux d'H₂.

Avantageusement, la variation de température ΔTmax entre deux lits catalytiques est obtenue par contrôle des conditions de débit et/ou de température des flux d'H₂ injectés entre lesdits lits catalytiques.

La température du flux d'H₂ injecté est le plus souvent la température ambiante, mais elle peut être supérieure ou inférieure à la température ambiante.

La différence de température ΔTmax (température d'injection d'H₂ de rang (n+1) - température d'injection d'H₂ de rang (n)) pourra être nulle, voire négative, si la température d'injection d'H₂ au rang n+1 est plus faible que la température d'injection d'H₂ au rang n.

Le ΔT cible entre deux injections d'H₂ correspond à une variation de température répondant aux conditions définies ci-dessus pour ΔTmax.

La quantité d'hydrogène injectée dans un lit (correspondant à la quantité d'hydrogène injectée en amont de ce lit) est de préférence égale à la quantité stoechiométrique nécessaire pour atteindre un ΔT cible dans ce lit ; l'apport de chaleur peut provenir de l'exothermicité des réactions d'HDO.
De préférence, la quantité d'hydrogène injectée en tête du 1^{er} lit ne dépasse pas une valeur maximum telle que la pression partielle de l'eau à la température réactionnelle est trop faible pour maintenir l'eau à l'état liquide (que l'eau de l'huile de pyrolyse ne se vaporise pas).

On ne sortirait pas du cadre de l'invention en remplaçant tout ou partie de l'huile de pyrolyse de biomasse par la phase organique ligneuse issue de la séparation d'huile de pyrolyse de biomasse additivée d'eau, cette séparation conduisant à 2 phases : une phase aqueuse légère (d'une densité inférieure à celle de l'huile de pyrolyse) et une phase organique ligneuse ou riche en lignine pyrolytique.

La pression au sein du ou des réacteurs d'hydrodésoxygénation est en général comprise entre 5 à 20 MPa, de préférence entre 10 et 15 MPa. Les pressions élevées permettent en général une injection d'hydrogène plus importante entre chaque lit et conduisent à un design de réacteur contenant moins de lits catalytiques avec des exothermicités plus élevées.

L'utilisation de pressions élevées permet en général de favoriser la réaction d'HDO et d'éviter au maximum la formation de coke sur les catalyseurs d'hydrotraitement ainsi que de diminuer la vitesse des réactions de polymérisation de l'huile de pyrolyse par rapport aux réactions d'HDO.

En général, la température d'entrée du 1^{er} lit catalytique (où une partie de l'hydrogène et l'huile de pyrolyse sont mis en contact est comprise entre 120 et 180 °C, de préférence entre 140 et 160 °C. Cette température d'entrée du 1^{er} lit catalytique peut être contrôlée par la température et/ou le débit de l'injection d'H2 en tête du 1^{er} lit catalytique.

En général, la température en sortie du dernier lit catalytique est comprise entre 320 et 380°C lorsque qu'une HDO poussée (conversion > 90%) ou totale (100%) est souhaitée. Cette température en sortie du dernier lit catalytique est contrôlée par la température et/ou le débit des différentes injections d'H2.

En général, la température en sortie du dernier lit catalytique est comprise entre 180 et 320°C lorsqu'une HDO partielle est souhaitée (entre 10 et 90% de conversion).

A titre d'exemple, dans le cas où le procédé selon l'invention comprend 2 injections d'hydrogène, si la 1^{ère} injection d'H₂ est effectuée à une température de 130 °C, le reste de l'hydrogène sera injecté entre 2 lits en un point où la température à l'intérieur du réacteur ne dépasse pas 180°C (130 + 50), et avantageusement où la température ne dépasse pas 150/160 °C ((130+20)/(130+30))
A titre d'exemple, dans le cas où le procédé selon l'invention comprend 3 injections d'hydrogène, si la 1^{ère} injection d'H₂ est effectuée à une température de 150 °C, la 2^{nde} injection d'hydrogène se fera entre 2 lits en un point où la température à l'intérieur du réacteur ne dépasse pas 200°C (150 + 50), et avantageusement ne dépasse pas 170/180 °C ((150+20)/(150+30)) ; et la 3^{ème} injection se fera entre 2 lits à une température à l'intérieur du réacteur qui ne dépasse pas de plus de 50 °C (de préférence pas plus de 20 à 30 °C) la température à l'intérieur du réacteur de la 2^{nde} injection d'H₂.

Pour une HDO poussée ou totale, la quantité d'hydrogène totale injectée dans le ou les réacteurs nécessaire dans le procédé HDO selon l'invention est en général supérieure aux besoins stoechiométriques des réactions d'HDO (en général de 2 à 7 % en masse par masse d'huile de pyrolyse). La quantité d'hydrogène injectée dans un lit catalytique est ajustée en fonction du ΔT cible de ce lit, donc de l'avancement de l'HDO. Les catalyseurs utilisables dans le procédé de la présente invention peuvent être choisis parmi les catalyseurs utilisés usuellement dans les unités d'hydrogénation et d'hydrotraitement d'hydrocarbures pétroliers. A titre d'exemple de catalyseurs d'HDO, on peut citer les catalyseurs comprenant au moins un des métaux du groupe VI, VII ou VIII (Ni, Cr, Mo, W, Co, Rh, Ir, Ru, Pt, Pd, Re,...) ; le ou les métaux sont de préférence déposés et/ou dispersés sur des supports tels que l'alumine, la silice-alumine, cérium, zirconium, carbone, titane, zéolite (zéolite beta, zéolite Y, zéolites de type MFI, mordénite, silicalite, SM3 et/ou faujasite ; voir par exemple les catalyseurs décrits dans WO2009/126508, page 12, [0028]. Les métaux peuvent être à l'état d'oxydes ou non ; le support catalytique est de préférence choisi parmi les supports poreux ayant une surface spécifique élevée, par exemple gamma-alumine, charbon actif, zéolite. Les catalyseurs peuvent être des catalyseurs neufs, régénérés ou réjuvénés.

Les lits catalytiques peuvent comprendre un ou plusieurs catalyseurs différents qui sont mélangés.

Les lits catalytiques peuvent être des lits fluidisés, ou de manière avantageuse, des lits fixes.

Le procédé d'HDO selon l'invention peut être mis en oeuvre dans un ou plusieurs réacteurs catalytiques associés en série : les lits catalytiques sont ainsi répartis dans plusieurs réacteurs catalytiques ; l'injection d'H₂ effectuée en tête du 2^{nd} réacteur correspond à une injection entre 2 lits puisqu'elle se situe entre le dernier lit du 1^{er} réacteur et le 1^{er} lit du 2^{nd} réacteur. Ce dispositif s'applique mutatis mutandis pour les injections en tête des réacteurs suivants.

Au sein de chaque réacteur d'HDO, la composition des lits catalytiques peut être identique ou non.

En sortie du dernier lit catalytique du dernier réacteur d'HDO, on obtient une phase liquide aqueuse et une phase organique contenant des composés hydrocarbonés.

Les réactions d'HDO peuvent être totales ou partielles. Au sens de la présente invention,
- la réaction d'HDO est dite « totale », lorsque la phase organique en sortie du dernier lit catalytique ne contient plus d'oxygène ;
- la réaction d'HDO est dite « poussée » quand la phase organique liquide issue du dernier lit catalytique d'HDO contient moins de 10 % m/m de la quantité initiale d'oxygène contenue dans l'huile de pyrolyse mise en oeuvre ;
- la réaction d'HDO est dite « partielle » quand la phase organique liquide issue du dernier lit catalytique d'HDO contient entre 10 % et 90 % m/m de la quantité initiale d'oxygène contenue dans l'huile de pyrolyse mise en oeuvre.

Les inventeurs ont constaté que dans leurs exemples de réalisation du procédé selon l'invention, pour que la réaction d'HDO soit « poussée », voire « totale », il est nécessaire d'avoir au moins 4 injections séparées ou distinctes d'H₂ selon les conditions opératoires détaillées précédemment, de préférence au moins 5, et avantageusement au moins 6.

La phase organique issue du procédé HDO selon l'invention tel que défini plus haut, lorsqu'elle contient entre 0 et 10 % m/m d'oxygène de la quantité d'oxygène total contenu dans l'huile de pyrolyse de départ peut avantageusement être utilisée, c'est-à-dire incorporée dans un pool carburant ou dans une raffinerie en vue de la production de carburants ou de combustibles liquides, de type essence, jet, kérosène, diesel, fioul domestique et/ou naphta si un traitement de finition s'avère nécessaire.

A la différence de la phase organique obtenue par séparation de phases de l'huile de pyrolyse additivée d'eau, la phase organique issue de l'HDO selon l'invention est miscible avec des hydrocarbures : elle peut donc, si nécessaire, être avantageusement traitée en co-processing avec une charge minérale fossile ou fossile suivant un procédé de conversion classique (hydrotraitement, FCC, viscoréduction, coker), connus en soi.

De manière avantageuse, la phase organique issue de l'HDO de l'huile de pyrolyse de biomasse peut représenter de 2 jusqu'à 30 % en masse de la charge d'une unité du schéma de raffinage.

De manière avantageuse, le co-traitement (i-e hydrotraitement) avec la charge d'origine minérale se fera après un fractionnement de l'effluent organique en sortie de l'unité d'HDO de l'huile de pyrolyse en plusieurs coupes ayant des intervalles de distillation séparés, notamment coupes gazole, kérosène, jet, essence, fioul domestique et/ou naphta.

La coupe de type gazole issue du fractionnement de la phase organique issue de l'HDO peut par exemple être hydrotraitée avec une charge minérale de type gazole qui peut être issue de la distillation atmosphérique du pétrole brut (Gasoil straight run), d'une distillation sous vide du résidu atmosphérique (vacuum gas oil) et/ou une charge de type gazole issue d'un procédé de conversion. Le fait de pouvoir utiliser une unité existante pour l'étape d'hydrotraitement permet de réduire considérablement les coûts.

De même, après fractionnement, la coupe de type kérosène et la coupe de type essence issues de l'HDO de l'huile de pyrolyse peuvent être, si nécessaire, co-traitées dans une unité d'hydrotraitement conventionnelle avec une charge de type kérosène et une charge de type essence respectivement.

La phase organique lourde issue du procédé d'HDO selon l'invention (1^{ère} étape) peut nécessiter un autre hydrotraitement (par exemple un procédé d'hydrodésoxygénation classique connu en soi) afin de produire des bases carburant ou combustibles si sa concentration en oxygène représente plus de 10 % m/m de la quantité.

Lorsque la phase organique issue du procédé HDO selon l'invention tel que défini plus haut contient entre 10 % et 90 % m/m de la quantité initiale d'oxygène contenue dans l'huile de pyrolyse peut être utilisée telle quelle dans une raffinerie en vue de la production de carburants ou de combustibles liquides par un traitement dans une unité de conversion définie précédemment. Cette phase organique peut également être utilisée comme source d'intermédiaires chimiques oxygénés, qui sont des composés ayant par exemple un ou plusieurs groupements fonctionnels tels qu'aldéhyde, et/ou cétone, et/ou acide, et/ou alcools.....

La phase aqueuse obtenue après le procédé d'HDO est dite « légère » car elle a une densité inférieure à celle de l'huile de pyrolyse de départ. Elle contient moins de produits lourds et de soufre que la phase aqueuse issue de la séparation physique de l'huile de pyrolyse additivée d'eau.

L'invention concerne également un procédé de valorisation d'huile de pyrolyse et/ou de la phase organique ligneuse issue de la séparation de phases d"huile de pyrolyse de biomasse additivée d'eau en carburants et combustibles liquides, susceptible de fonctionner en continu comprenant les étapes suivantes :
- HDO poussée ou totale d'huile de pyrolyse et/ou de la phase organique ligneuse issue de la séparation de phases d"huile de pyrolyse de biomasse additivée d'eau selon le procédé d'HDO tel que défini précédemment (1^{ère} étape) puis séparation de l'effluent liquide obtenu en une fraction aqueuse légère et une fraction organique lourde ;
- pré-réformage de la fraction aqueuse « légère » et traitement de la fraction aqueuse « légère » dans une unité SMR afin de produire de l'hydrogène ;
- hydrotraitement de ladite fraction organique « lourde » issue de l'HDO, éventuellement en association avec des bases carburants ou combustibles de raffinerie conventionnelles.

La phase aqueuse « légère » obtenue après le procédé d'HDO selon l'invention contient des produits hydrocarbonés n'ayant en général pas plus de 6 ou 7 atomes de carbone, solubles dans l'eau. Ces produits hydrocarbonés peuvent être transformés de manière quasi-totale voire totale en méthane et CO₂ lors d'une étape de pré-réformage menée à des températures (très) inférieures à celles pratiquées pour le vaporéformage de méthane (SMR) ultérieur. Ce procédé associant pré-réformage et vaporéformage présente l'avantage d'éviter la formation de coke.

La phase aqueuse obtenue à l'issue du procédé d'HDO selon l'invention contenant moins de produits lourds et de soufre (connu comme poison des catalyseurs de vapo-réformage et éliminé sous forme d'H₂S lors de l'HDO) que la fraction aqueuse obtenue par une simple séparation de phases après ajout d'eau à de l'huile de pyrolyse, elle peut être envoyée vers le pré-réformeur sans étape de purification supplémentaire.

Le pré-réformage de la phase aqueuse permet notamment de transformer les composés en C₂₊ en CH₄, CO, CO₂ et H₂ en présence d'un catalyseur conventionnel de pré-réformage, en particulier un catalyseur conventionnel de pré-réformeur de GPL/ naphta, par exemple de type Ni ou NiO. Cette réaction est en général réalisée dans un lit fixe conventionnel.

L'effluent sortant du pré-réformeur est alors envoyé dans une unité SMR conventionnelle (acronyme de « Steam Methane Reforming » qui signifie « réformage du méthane à la vapeur ») en ajoutant de la vapeur d'eau pour produire H₂. Cette réaction est en général réalisée au sein de nombreux tubes remplis de catalyseur disposés dans un four.

Les réactions simplifiées se produisant dans le pré-réformeur peuvent être schématisées par les équations chimiques suivantes :

CₓH_{y}O_{z} + (x-z) H₂O ↔ (x+y/2-z) H₂ + xCO (1)

CO + 3H₂ ↔ CH₄ + H₂O (2)

CO + H₂O ↔ CO₂ + H₂ (3)

Bilan :

CₓH_{y}O_{z} + (x-y/4-z/2) H₂O ↔ (x/2+y/8-z/4) CH₄ + (x/2-y/8+z/4) CO₂ (4)

Le pré-réformage peut être réalisé à une température de 225 à 450 °C, sous une pression de 0,1 à 3 MPa (l'utilisation de pressions élevées n'est en général pas favorable d'un point de vue thermodynamique mais permet de diminuer le volume des réacteurs et ainsi de limiter les coûts d'investissement). La gamme de température considérée permet de se placer dans un domaine thermodynamique favorable et d'éviter les réactions qui conduisent à la formation de coke. Le réacteur considéré peut être du type lit fluidisé ou lit fixe, préférentiellement de type lit fixe.

Le pré-réformage est de préférence réalisé avec un rapport molaire eau/charge HC élevé, de 10 à 15. Ce rapport est plus élevé que ce qu'exige la thermodynamique de la réaction (environ 3 à 4). Ainsi, il permet à la fois de déplacer l'équilibre de la réaction vers la production de méthane et d'hydrogène et également de limiter la formation de coke. En fonction du ratio eau/organiques de la fraction aqueuse légère arrivant en charge du pré-réformeur, de l'eau sera ajoutée afin d'obtenir un ratio eau/composé oxygéné qui sera préférentiellement voisin de 13.

La réaction se produisant au niveau du SMR est la suivante :

CH₄ + H₂O ↔ CO + 3H₂.

Le vaporéformage peut être réalisé à une température de 600-900°C, sous une pression de 0,1 à 3 MPa (l'utilisation de pressions élevées n'est en général pas favorable d'un point de vue thermodynamique mais permet de diminuer le volume des réacteurs et ainsi de limiter les coûts d'investissement). Le vaporéformage sera de préférence réalisé avec un rapport molaire eau/charge HC de 3 à 4. Typiquement, le vaporéformage est réalisé dans de nombreux petits tubes (plusieurs centaines) remplis de catalyseurs.

On peut également prévoir une étape de conversion catalytique du CO résiduel, éventuellement suivie d'une étape de purification de l'hydrogène, après l'étape de traitement de l'effluent dans l'unité SMR.

L'étape de conversion catalytique du CO résiduel est obtenue par déplacement (Water Gas Shift) de l'équilibre suivant en faveur de la formation de CO₂ :

CO + H₂O = CO₂ + H₂.

Ce déplacement est favorisé à basse température et avec un ratio eau/C élevé.

La purification de l'hydrogène peut par exemple réalisée par le procédé PSA (de l'Anglais « Pressure Swing Adsorption » qui signifie Adsorption Modulée en Pression) basé sur l'adsorption des impuretés sur tamis moléculaires.

Avantageusement, l'hydrogène produit à partir du SMR de la fraction aqueuse légère peut être utilisé pour l'hydrodésoxygénation de l'huile de pyrolyse et/ou pour l'hydrotraitement de la fraction organique lourde.

L'apport extérieur d'hydrogène nécessaire aux réactions d'hydrodésoxygénation (HDO) et/ou d'hydrotraitement (HDT) est ainsi considérablement réduit, et peut éventuellement être supprimé en cours de fonctionnement de l'installation selon la composition et la quantité de fraction aqueuse.

Par exemple, avec une fraction aqueuse légère contenant 50 % d'eau et 50 % de composés organiques, la quantité de H₂ produit suffit pour couvrir les besoins en H₂ de l'HDO de l'huile de pyrolyse. Un apport extérieur de H₂ n'est alors nécessaire qu'au démarrage de l'installation, avant le début de production de H₂.

L'effluent issu de l'hydrotraitement de la fraction organique lourde peut également être séparé en une fraction aqueuse légère et une fraction organique lourde lorsque la quantité de fraction aqueuse est suffisamment importante pour pouvoir être séparée, cette fraction aqueuse légère étant alors envoyée au pré-réformage avec la fraction aqueuse légère issue de l'hydrodésoxygénation de l'huile de pyrolyse : la production d'hydrogène peut alors être augmentée.

Avec le procédé de valorisation de l'huile de pyrolyse selon l'invention, la totalité de l'huile de pyrolyse est valorisée, permettant notamment la production d'hydrogène et de bases carburants du type GPL (Gaz de pétrole liquéfié), essence, kérosène, gazole, gazole sous-vide...

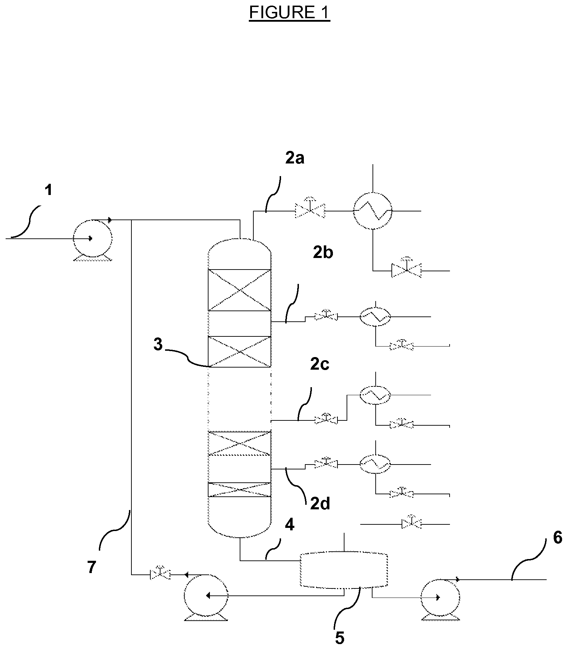

La Figure 1 représente un schéma simplifié de fonctionnement du procédé selon l'invention utilisant un réacteur d'HDO (3) comprenant une pluralité de lits catalytiques (4 lits représentés) pouvant fonctionner selon le procédé de la revendication 1 ; les moyens de contrôle de la température ne sont pas indiqués sur ce schéma.

L'huile de pyrolyse (1) est introduite en tête du réacteur ; l'hydrogène est introduit de manière fractionnée (2a, 2b, 2c, 2d) : en tête du réacteur et en amont du 1^{er} lit catalytique (2a) puis entre les lits catalytiques (2b, 2c, 2d).

L'effluent (4) obtenu sortie de réacteur comprend une phase aqueuse (6) et une phase organique (7) qui sont séparés par passage dans un séparateur (5) ; une partie de la phase organique (7) peut être recyclée dans le réacteur avec l'huile de pyrolyse (1) comme indiqué sur la Figure 1.

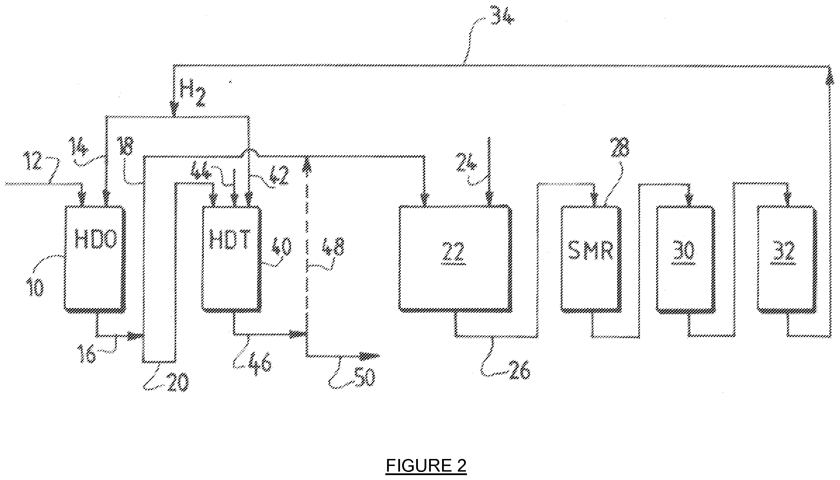

La Figure 2 représente un schéma simplifié d'un mode de réalisation préféré du procédé de la revendication 11.

L'installation comprend un réacteur HDO (10) fonctionnant selon le procédé HDO de l'invention, alimentée par de l'huile de pyrolyse (12) et de l'hydrogène (14) (seule la 1^{ère} injection d'hydrogène est indiquée dans le schéma. L'effluent (16) sortant du réacteur HDO 10 est séparé en une fraction aqueuse légère (18) et une fraction organique lourde (20).

La fraction aqueuse légère (18) est ensuite amenée en charge d'un pré-réformeur (22) lequel est alimenté en vapeur d'eau (24). L'effluent (26) sortant du pré-réformeur (22) est ensuite envoyé dans une unité SMR (28) afin de produire de l'hydrogène. Le CO résiduel contenu dans l'hydrogène peut être converti dans une unité « water gas shift » (30) puis l'hydrogène, purifié dans une unité PSA (32), afin d'obtenir de l'hydrogène purifié (34).

La fraction organique lourde (20) est par exemple envoyée en charge d'une unité d'hydrotraitement (HDT) (40) si la réaction d'HDO est poussée ou totale. On peut prévoir de fractionner cette fraction organique lourde (20) avant son envoi à l'unité HDT 40, l'une des coupes obtenues, par exemple la coupe gazole, étant renvoyée à l'HDT.

Cette unité HDT (40) est alimentée en H₂ (42) et éventuellement avec la charge de type gazole issue de l'HDO de l'huile de pyrolyse (44). L'effluent (46) obtenu en sortie de l'HDT (40) peut servir de bases carburants du type GPL (gaz de pétrole liquéfié), essence, kérosène, gazole, gazole sous-vide,...)

L'effluent (46) peut également se présenter sous la forme de 2 phases dont une fraction aqueuse légère (48) et une fraction organique lourde (50). La fraction aqueuse légère (48) peut alors être envoyée en charge du pré-réformeur (22) selon les besoins. La fraction organique lourde (50) peut avantageusement servir de carburant ou être incorporé à un pool carburant , en mélange avec des bases d'origine fossile ou minérale (bases pétrolères de raffinerie, ....) .

L'hydrogène obtenu (34) peut alors être utilisé en raffinerie, mais peut de préférence être utilisé pour alimenter l'unité HDO (10) et/ou l'unité HDT (40).

## Revendications

1. Procédé d'hydrodésoxygénation catalytique (HDO) d'huile de pyrolyse de biomasse et/ou de la phase organique ligneuse issue de la séparation de phases d'huile de pyrolyse de biomasse additivée d'eau, comprenant une pluralité de lits catalytiques disposés en série, répartis dans un ou plusieurs réacteurs, équipé(s) de moyens de contrôle de la température, et **caractérisé par** :
• la pression dans le ou les réacteurs d'HDO est comprise entre 5 et 20 MPa,
• l'injection de l'huile de pyrolyse en tête du 1^{er} lit catalytique,
• l'injection de manière fractionnée de l'hydrogène :
• la 1^{ère} injection d'hydrogène est effectuée en tête du 1^{er} lit catalytique, en contrôlant la température d'entrée du 1^{er} lit catalytique entre 120 et 180 °C par le débit et/ou la température d'injection d'H₂,
• la ou les autres injections d'H₂ étant effectuée(s) entre 2 lits catalytiques et choisie(s) telle(s) que la différence de température ΔTmax correspondant ainsi à la variation de température du lit catalytique situé entre deux injections successives d'H₂ ne dépasse par 50 °C, ΔTmax ≤ 50 °C, et dans laquelle on contrôle par la température et/ou le débit des différentes injections d'H₂ la température en sortie du dernier lit catalytique :
o entre 320 et 380°C, le procédé comprenant au moins 4 injections d'H₂, lorsque que l'HDO est poussée, la phase organique liquide issue du dernier lit catalytique d'HDO contenant moins de 10 % m/m de la quantité initiale d'oxygène contenue dans l'huile de pyrolyse mise en oeuvre ou lorsque que l'HDO est totale la phase organique en sortie du dernier lit catalytique ne contenant plus d'oxygène,
o entre 180 et 320°C lorsque l'HDO est partielle, la phase organique liquide issue du dernier lit catalytique d'HDO contenant entre 10 % et 90 % m/m de la quantité initiale d'oxygène contenue dans l'huile de pyrolyse mise en oeuvre,
• la séparation des effluents liquides en sortie du dernier lit catalytique en une phase liquide aqueuse et une phase organique, une partie de la phase organique pouvant éventuellement être recyclée dans le réacteur, par exemple être ré-injectée avec l'huile de pyrolyse,
ledit procédé fonctionnant en continu.

2. Procédé selon la revendication 1, **caractérisé en ce que** la pression dans le ou les réacteurs d'HDO est comprise entre 10 et 15 MPa.

3. Procédé selon la revendication 1 ou 2, **caractérisé en ce que** la température d'entrée du 1^{er} lit catalytique est comprise entre 140 et 160 °C.

4. Procédé selon l'une quelconque des revendications 1 à 3, **caractérisé en ce que** le ou les catalyseurs d'HDO des lits catalytiques, identiques ou différents, sont choisis parmi les catalyseurs comprenant au moins un des métaux du groupe VI, VII ou VIII (Ni, Cr, Mo, W, Co, Rh, Ir, Ru, Pt, Pd, Re,...).

5. Procédé d'HDO selon l'une quelconque des revendications 1 à 4, avec un ΔTmax ≤ 20 à 30 °C entre chaque injection d'H₂.

6. Procédé d'HDO selon l'une quelconque des revendications 1 à 5, dans lequel la quantité d'hydrogène injectée dans un lit est égale à la quantité stoechiométrique nécessaire pour atteindre le ΔTmax dans ce lit.

7. Procédé d'HDO selon l'une quelconque des revendications 1 à 6, **caractérisé en ce que** la quantité d'hydrogène injectée en tête du 1^{er} lit ne dépasse pas une valeur maximum telle que la pression partielle de l'eau à la température réactionnelle est trop faible pour maintenir l'eau de l'huile de pyrolyse à l'état liquide.

8. Procédé d'HDO selon l'une quelconque des revendications 1 à 7, **caractérisé en ce qu'**il comprend au moins 5 injections d'H₂ lorsque l'HDO est poussée ou totale.

9. Procédé de préparation de carburants et/ou de combustibles liquides d'origine renouvelable ou partiellement renouvelable, de type essence, jet, kérosène, diesel, fioul domestique et/ou naphta, à base d'huile de pyrolyse de biomasse et/ou de la phase organique issue de la séparation de phase d"huile de pyrolyse de biomasse additivée d'eau, ayant subi un traitement HDO poussé ou total selon l'une quelconque des revendications 1 à 8, et éventuellement de base(s) fossiles ou minérales telles que base(s) pétrolière(s) de raffinerie.

10. Procédé de préparation d'intermédiaires chimiques à base d'huile de pyrolyse ayant subi un traitement d'HDO partielle selon l'une quelconque des revendications 1 à 7.

11. Procédé de valorisation d'huile de pyrolyse et/ou de la phase organique ligneuse issue de la séparation de phases d'huile de pyrolyse de biomasse additivée d'eau en carburants et/ou combustibles liquides, comprenant les étapes suivantes :
- une étape d'HDO poussée ou totale d'huile de pyrolyse et/ou de la phase organique ligneuse issue de la séparation de phases d"huile de pyrolyse de biomasse additivée d'eau selon l'une quelconque des revendications 1 à 8,
- puis séparation de l'effluent liquide obtenu en une fraction aqueuse légère et une fraction organique lourde ;
- pré-réformage de la fraction aqueuse « légère » et traitement de la fraction aqueuse « légère » dans une unité SMR afin de produire de l'hydrogène ;
- hydrotraitement de ladite fraction organique « lourde » issue de l'HDO, éventuellement en association avec des bases carburants ou combustibles de raffinerie conventionnelles.

## Patentansprüche

1. Verfahren zur katalytischen Hydro-Deoxygenierung (HDO) von Biomasse-Pyrolyseöl und/oder der holzartigen organischen Phase, die aus der Trennung von mit Wasser angereicherten Biomasse-Pyrolyseölphasen resultiert, das eine Mehrzahl von in Reihe angeordneten, in einem oder mehreren Reaktoren verteilten, mit Temperaturregelmitteln versehenen katalytischen Betten umfasst und durch Folgendes gekennzeichnet ist:
• der Druck in dem/den HDO-Reaktor(en) liegt zwischen 5 und 20 MPa,
• die Einspritzung von Pyrolyseöl eingangs des ersten katalytischen Bettes,
• fraktionierte Einspritzung von Wasserstoff:
• die erste Wasserstoffeinspritzung wird eingangs des ersten katalytischen Bettes durchgeführt, wobei die Eintrittstemperatur des ersten katalytischen Bettes zwischen 120 und 180 °C durch den Durchsatz und/oder die Einspritztemperatur von H₂ geregelt wird,
• wobei die andere(n) H₂-Einspritzung(en) zwischen zwei katalytischen Betten durchgeführt und so gewählt wird/werden, dass die Temperaturdifferenz ΔTmax, die der Temperaturschwankung des katalytischen Bettes zwischen zwei aufeinanderfolgenden H₂-Einspritzungen entspricht, 50 °C, ΔTmax ≤ 50 °C, nicht übersteigt, und wobei die Temperatur am Ausgang des letzten katalytischen Bettes durch die Temperatur und/oder den Durchsatz der verschiedenen H₂-Einspritzungen gesteuert wird:
o zwischen 320 und 380 °C, wobei das Verfahren zumindest 4 H₂-Einspritzungen umfasst, wenn die HDO verstärkt wird, wobei die flüssige organische Phase aus dem letzten katalytischen Bett der HDO weniger als 10 % m/m der ursprünglichen Sauerstoffmenge enthält, die im verwendeten Pyrolyseöl enthalten ist, oder wenn die HDO vollständig ist, die organische Phase am Ausgang des letzten katalytischen Bettes keinen Sauerstoff mehr enthält,
o zwischen 180 und 320 °C bei teilweiser HDO, wobei die aus dem letzten katalytischen Bett der HDO hervorgegangene flüssige organische Phase zwischen 10 % und 90 % m/m der ursprünglichen Sauerstoffmenge des verwendeten Pyrolyseöls enthält,
• die Trennung der flüssigen Ableitungen am Ausgang des letzten katalytischen Bettes in eine wässrige Flüssigphase und eine organische Phase, wobei ein Teil der organischen Phase eventuell im Reaktor recycelt und zum Beispiel mit dem Pyrolyseöl wieder eingespritzt werden kann,
wobei der Prozess kontinuierlich arbeitet.

2. Verfahren nach Anspruch 1, **dadurch gekennzeichnet, dass** der Druck in dem (den) HDO-Reaktor(en) zwischen 10 und 15 MPa liegt.

3. Verfahren nach Anspruch 1 oder 2, **dadurch gekennzeichnet, dass** die Eintrittstemperatur des ersten katalytischen Bettes zwischen 140 und 160 °C liegt.

4. Verfahren nach einem der Ansprüche 1 bis 3, **dadurch gekennzeichnet, dass** der/die HDO-Katalysator(en) gleicher oder unterschiedlicher katalytischer Betten unter Katalysatoren ausgewählt werden, die zumindest eines der Metalle der Gruppe VI, VII oder VIII (Ni, Cr, Mo, W, Co, Rh, Ir, Ru, Pt, Pd, Re, ...) enthalten.

5. HDO-Verfahren nach einem der Ansprüche 1 bis 4 mit einer ΔTmax ≤ 20 bis 30 °C zwischen jeder H₂-Einspritzung.

6. HDO-Verfahren nach einem der Ansprüche 1 bis 5, wobei die Menge des in ein Bett eingespritzten Wasserstoffs gleich der stöchiometrischen Menge ist, die zum Erreichen der ΔTmax in diesem Bett erforderlich ist.

7. HDO-Verfahren nach einem der Ansprüche 1 bis 6, **dadurch gekennzeichnet, dass** die eingangs des ersten Bettes eingespritzte Wasserstoffmenge keinen solchen Höchstwert überschreitet, so dass der Partialdruck des Wassers bei der Reaktionstemperatur zu niedrig ist, um das Wasser des Pyrolyseöls im flüssigen Zustand zu halten.

8. HDO-Verfahren nach einem der Ansprüche 1 bis 7, **dadurch gekennzeichnet, dass** es mindestens 5 H₂-Einspritzungen umfasst, wenn die HDO verstärkt oder vollständig ist.

9. Verfahren zur Herstellung von Kraftstoffen und/oder flüssigen Brennstoffen erneuerbaren oder teilweise erneuerbaren Ursprungs vom Typ Benzin, Jet, Kerosin, Diesel, Heizöl und/oder Naphtha auf der Basis von Biomasse-Pyrolyseöl und/oder der organischen Phase, die aus der Phasentrennung von mit Wasser angereichertem Biomasse-Pyrolyseöl hervorgeht, nach einer verstärkten oder vollständigen HDO-Behandlung nach einem der Ansprüche 1 bis 8, und eventuell fossiler oder mineralischer Art(en) wie zum Beispiel Raffinerieölbasis(en).

10. Verfahren zur Herstellung von chemischen Zwischenprodukten auf Pyrolyseölbasis, die einer teilweisen HDO-Behandlung nach einem der Ansprüche 1 bis 7 unterzogen wurden.

11. Verfahren zur Veredelung von Pyrolyseöl und/oder der holzartigen organischen Phase, die aus der Trennung von Pyrolyseölphasen aus mit Wasser angereicherter Biomasse hervorgeht, in Kraftstoffe und/oder flüssige Brennstoffe, das die folgenden Schritte umfasst:
- einen verstärkten oder vollständigen HDO-Schritt mit Pyrolyseöl und/oder der holzartigen organischen Phase, die aus der Trennung von Pyrolyseölphasen aus mit Wasser angereicherter Biomasse hervorgeht, nach einem der Ansprüche 1 bis 8,
- dann Trennung der erhaltenen flüssigen Ableitung in eine leichte wässrige Fraktion und eine schwere organische Fraktion;
- Vorreformierung der "leichten" wässrigen Fraktion und Behandlung der "leichten" wässrigen Fraktion in einer SMR-Anlage zur Erzeugung von Wasserstoff;
- Hydrobehandlung der "schweren" organischen Fraktion, die aus der HDO hervorgegangen ist, eventuell in Verbindung mit konventionellen Kraftstoffbasen oder Raffineriebrennstoffen.

## Claims

1. A process for the catalytic hydrodeoxygenation (HDO) of biomass pyrolysis oil and/or of the ligneous organic phase resulting from the phase separation of biomass pyrolysis oil to which water has been added, comprising a plurality of catalytic beds arranged in series and distributed in one or more reactors which is/are equipped with means for controlling the temperature, and **characterized by**:
• the pressure in the HDO reactor or reactors is between 5 and 20 MPa,
• the injection of the pyrolysis oil at the top of the 1^{st} catalytic bed,
• the fractional injection of the hydrogen:
• the 1^{st} injection of hydrogen is carried out at the top of the 1^{st} catalytic bed by controlling the inlet temperature of the 1^{st} catalytic bed between 120 and 180 °C by the temperature and/or the flow rate of the H₂ injection,
• the other injection or injections of H₂ being carried out between 2 catalytic beds and being chosen so that the temperature difference ΔTmax thus corresponding to the temperature variation of the catalytic bed situated between two successive H₂ injections does not exceed 50°C, ΔTmax ≤ 50°C, and wherein the oulet temperature of the final catalytic bed is controlled by the temperature and/or the flow rate of the different injections of H₂:
∘ between 320 and 380°C, the process comprising at least 4 H₂ injections, when the HDO is extensive, the liquid organic phase resulting from the final HDO catalytic bed comprising less than 10% w/w of the initial amount of oxygen present in the pyrolysis oil employed or when the HDO is total the organic phase at the outlet of the final catalytic bed no longer comprises oxygen,
∘ between 180 and 320°C when the HDO is partial, the liquid organic phase resulting from the final HDO catalytic bed comprising between 10% and 90% w/w of the initial amount of oxygen present in the pyrolysis oil employed,
• the separation of the liquid effluents at the outlet of the final catalytic bed into a liquid aqueous phase and an organic phase, it being possible for a portion of the organic phase optionally to be recycled in the reactor, for example to be reinjected with the pyrolysis oil,
said process operating continuously.

2. The process as claimed in claim 1, **characterized in that** the pressure in the HDO reactor or reactors is between 10 and 15 MPa.

3. The process as claimed in claim 1 or 2, **characterized in that** the inlet temperature of the 1^{st} catalytic bed is between 140 and 160°C.

4. The process as claimed in any one of claims 1 to 3, **characterized in that** the HDO catalyst or catalysts of the catalytic beds, which are identical or different, are chosen from the catalysts comprising at least one of the metals from Group VI, VII or VIII (Ni, Cr, Mo, W, Co, Rh, Ir, Ru, Pt, Pd, Re, and the like).

5. The HDO process as claimed in any one of claims 1 to 4, with a ΔTmax ≤ 20 to 30°C between each H₂ injection.

6. The HDO process as claimed in any one of claims 1 to 5, **characterized in that** the amount of hydrogen injected into a bed is equal to the stoichiometric amount necessary to achieve a target ΔT in this bed.

7. The HDO process as claimed in any one of claims 1 to 6, **characterized in that** amount of hydrogen injected at the top of the 1^{st} bed does not exceed a maximum value such that the partial water pressure at the reaction temperature is too low to keep the water from the pyrolysis oil in the liquid state.

8. The HDO process as claimed in any one of claims 1 to 7, **characterized in that** it comprises at least 5 H₂ injections when the HDO is extensive or total.

9. A process for the preparation of liquid fuels of renewable or partially renewable origin, of gasoline, jet fuel, kerosene, diesel fuel, domestic heating oil and/or naphtha type, based on biomass pyrolysis oil and/or on the organic phase resulting from the phase separation of biomass pyrolysis oil to which water has been added, which has/have been subjected to an extensive or total HDO treatment as defined in any one of claims 1 to 8, and optionally on fossil or mineral base(s), such as refinery petroleum base(s).

10. A process for the preparation of chemical intermediates based on pyrolysis oil which has been subjected to a partial HDO treatment as defined in any one of claims 1 to 7.

11. A process for upgrading pyrolysis oil and/or the ligneous organic phase resulting from the phase separation of biomass pyrolysis oil to which water has been added to give liquid fuels, comprising the following stages:
- a step of extensive or total HDO of pyrolysis oil and/or of the ligneous organic phase resulting from the phase separation of biomass pyrolysis oil to which water has been added, according to any one of claims 1 to 8,
- followed by separation of the liquid effluent obtained into a light aqueous fraction and a heavy organic fraction;
- prereforming the "light" aqueous fraction and treating the "light" aqueous fraction in an SMR unit in order to produce hydrogen;
- hydrotreating said "heavy" organic fraction resulting from the HDO, optionally in combination with conventional refinery fuel bases.
